# EUROPÄISCHE PATENTANMELDUNG

(11) **EP 0 901 028 A1**
(43) Veröffentlichungstag der Anmeldung: **10.03.1999**
(21) Anmeldenummer: 98402110.5
(22) Anmeldetag: 26.08.1998
(51) Int. Cl.: G02B 6/44, G02B 6/48

(54) **Optisches Kabel und optischen Kabelsystem sowie Verfahren zur Herstellung eines optischen Kabelsystems**

(30) Priorität: 03.09.1997 DE 19738439
(71) Anmelder: ALCATEL, 75008 Paris (FR)
(72) Erfinder: Diehl, Bernhard, Dipl.-Ing., 41069 Mönchengladbach (DE); Fischer, Norbert, Dipl.-Ing., 41189 Mönchengladbach (DE); Ludl, Anton, Dipl.-Ing., 71640 Ludwigsburg (DE)
(74) Vertreter: Mende, Dirk

(57) **Zusammenfassung**

Ein optisches Kabelsystem (1) weist ein optisches Kabels (3) auf, das in einen Außenleiter (5) eines Koaxialkabels (8), wobei Innenleiter und Abstandshalter bzw. inneres Dielektrikum zuvor entfernt sind, oder in ein anderes enges Rohr eingezogen ist. Das optische Kabel (3) hat ein Zentralelement (9), zumindest eine über dem Zentralelement (9) angeordnete optische Ader (11) und einen Mantel (19). Das Zentralelement (9) des optischen Kabels (3) ist durch einen zentralen elektrischen Energie- oder Steuerleiter gebildet. Dies ermöglicht auf einfache Weise die Übertragung von elektrischer Energie oder elektrischen Steuersignalen mittels des optischen Kabelsystems (1) (Fig.).

## Beschreibung

Die Erfindung betrifft ein optisches Kabel mit einem Zentralelement, zumindest einer über dem Zentralelement angeordneten optischen Ader und einem Mantel, ein optisches Kabelsystem mit einem ein Zentralelement, zumindest eine über dem Zentralelement angeordnete optische Ader und einen Mantel aufweisenden optischen Kabel, das in einen Außenleiter einer Koaxialader oder eines Koaxialkabels, wobei Innenleiter und Abstandshalter bzw. inneres Dielektrikum zuvor entfernt sind, oder in ein anderes enges Rohr eingezogen ist, bzw. ein Verfahren zur Herstellung eines optischen Kabelsystems, bei dem zunächst aus einer Koaxialader oder einem Koaxialkabel der Innenleiter und die Abstandshalter bzw. das innere Dielektrikum entfernt werden und anschließend ein ein Zentralelement, zumindest eine über dem Zentralelement angeordnete optische Ader und einen Mantel aufweisendes optisches Kabel in einen Außenleiter der Koaxialader oder des Koaxialkabels eingezogen wird.

Es sind bereits optische Erdkabel bekannt, bei denen um ein Zentralelement eine oder mehrere Lagen von optischen Adern verseilt sind. Darüber sind beispielsweise eine Lage von zugfesten Elementen sowie ein Schichtenmantel angeordnet. Sollen optische Kabel in enge Rohre, beispielsweise in den Außenleiter eines im Erdboden oder in einem Gebäude verlegten, von seinem Dielektrikum bzw. den Abstandshaltern und seinem Innenleiter befreiten koaxialen Hochfrequenzkabels oder in ein in einem Energiekabel vorgesehenes Leerrohr eingezogen werden, so können dabei die verschiedensten Schwierigkeiten auftreten. Von zum Einziehen in enge Rohre geeigneten optischen Kabeln wird zudem gefordert, daß sie auch bei einer hohen Faserzahl einen möglichst geringen Außendurchmesser aufweisen.

In der DE 296 20 962 U1 ist ein optisches Kabel mit einer Mehrzahl von optischen Fasern beschrieben, über dessen Zentralelement langgestreckte Elemente angeordnet sind. Darüber ist ein dünner Außenmantel vorgesehen, der aus einem einen niedrigen Reibungsbeiwert aufweisenden Kunststoff gebildet ist. An der Oberfläche des Außenmantels zeichnen sich aufgrund dessen geringer Wanddicke die langgestreckten Elemente deutlich ab, so daß das optische Kabel eine geringe Auflagefläche aufweist und sich besser in enge Rohre oder dergleichen einziehen läßt.

Die EP 0 055 760 B1 betrifft ein Verfahren zum Umwandeln im Erdboden oder in Gebäuden verlegter elektrischer Kabel zur Aufnahme von neuen Leitern, indem Isoliermaterial und elektrische Leiter aus dem Kabel entfernt werden.

Ein Verfahren und eine Vorrichtung zum Entfernen der Trennungen eines koaxialen Kabels mit zentralem Leiter, um danach darin beispielsweise ein Glasfaserkabel zu verlegen, ist in der DE 195 45 347 A1 beschrieben.

Ausgehend von diesem Stand der Technik liegt der Erfindung das Problem zugrunde, ein insbesondere zum Einziehen in enge Rohre wie den Außenleiter einer Koaxialader oder eines Koaxialkabels geeignetes optisches Kabel bzw. ein optisches Kabelsystem derart auszubilden, daß neben der optischen Nachrichtenübertragung auch die Übertragung elektrischer Energie oder elektrischer Steuersignale möglich ist.

Dieses Problem wird gemäß der Erfindung dadurch gelöst, daß das Zentralelement des optischen Kabels durch einen zentralen elektrischen Energie- oder Steuerleiter gebildet ist.

Die durch die Erfindung erzielbaren Vorteile bestehen insbesondere darin, daß das ohnehin zur Zugentlastung von in optischen Adern angeordneten optischen Fasern benötigte Zentralelement des optischen Kabels zur Übertragung elektrischer Energie oder elektrischer Steuersignale verwendet werden kann. Dabei weist das optische Kabel durch das z. B. aus Kupfer oder Aluminium oder einer Legierung davon bestehende Zentralelement eine zum Einziehen in enge Rohre, in den Außenleiter eines von zentralem Innenleiter und Abstandshaltern bzw. Dielektrikum befreiten Koaxialkabels oder in eine entsprechend vorbereitete Koaxialader ausreichende Zugfestigkeit auf. Das erfindungsgemäße optische Kabel ist darüber hinaus einfach und kostengünstig herstellbar, da lediglich für das Zentralelement anstelle z. B. eines mit Glasfasern oder Aramidfasern verstärkten Kunststoffes ein elektrischer Leiter aus Kupfer oder Aluminium verwendet wird. Gemeinsam mit dem verbliebenen Außenleiter einer Koaxialader oder eines Koaxialkabels oder eines anderen als elektrischer Leiter dienenden elektrisch leitfähigen Rohres ist z. B. eine Stromversorgung optischer Verstärker möglich. Das optische Kabel kann bei einer Vielzahl von in dem Kabel angeordneten optischen Fasern einen kleinen Außendurchmesser aufweisen, so daß sich auch ein eine hohe Faserzahl aufweisendes erfindungsgemäßes optisches Kabel problemlos in den Außenleiter eines Koaxialkabels oder einer Koaxialader oder in ein anderes enges Rohr +einziehen läßt.

Durch die in den Unteransprüchen aufgeführten Merkmale sind vorteilhafte Weiterbildungen und Verbesserungen der Erfindung möglich.

Um auch bei einem kleinen Außendurchmesser des optischen Kabels eine möglichst große Anzahl von optischen Fasern in dem optischen Kabel unterbringen zu können, ist es von Vorteil,wenn die optische Ader durch eine eine rohrförmige Hülle und wenigstens eine in dieser Hülle verlaufende optische Faser aufweisende Hohl- oder Bündelader gebildet ist.

Von Vorteil ist es, wenn der Mantel des optischen Kabels aus Polyamid ausgebildet ist. Ein derartiger Mantel weist eine hohe Abriebfestigkeit und einen besonders niedrigen Reibungsbeiwert auf. Er gewährleistet geringe Reibungsverluste beim Einziehen des Kabels und ermöglicht kleine auf das optische Kabel wirkende Einziehkräfte.

Für einen möglichst geringen Außendurchmesser des optischen Kabels ist es von Vorteil, wenn der Mantel eine Wanddicke von 0,3 bis 1,2 mm aufweist. Ein derartig dünnwandiger Mantel ist für die Zwecke der Erfindung ausreichend, da er im wesentlichen lediglich als Schutz der optischen Adern beim Einziehen des optischen Kabels in den Außenleiter einer Koaxialader oder eines Koaxialkabels oder in ein anderes enges Rohr dient und der Außenleiter gemeinsam mit dem Mantel des Kabels bzw. das enge Rohr, gegebenenfalls gemeinsam mit über dem engen Rohr vorgesehenen Schichten, den eigentlichen Schutzmantel des optischen Kabels bilden.

Der Außenleiter der Koaxialader oder des Koaxialkabels bzw. ein diesem entsprechendes metallisches Rohr bildet im übrigen eine wirksame Diffusionssperre z. B. gegen den Eintritt von Wasserdampf in das Innere des Kabelsystems. Zudem kann der Außenleiter bzw. das metallische Rohr zu einer gegebenenfalls notwendigen Fehlermessung verwendet werden.

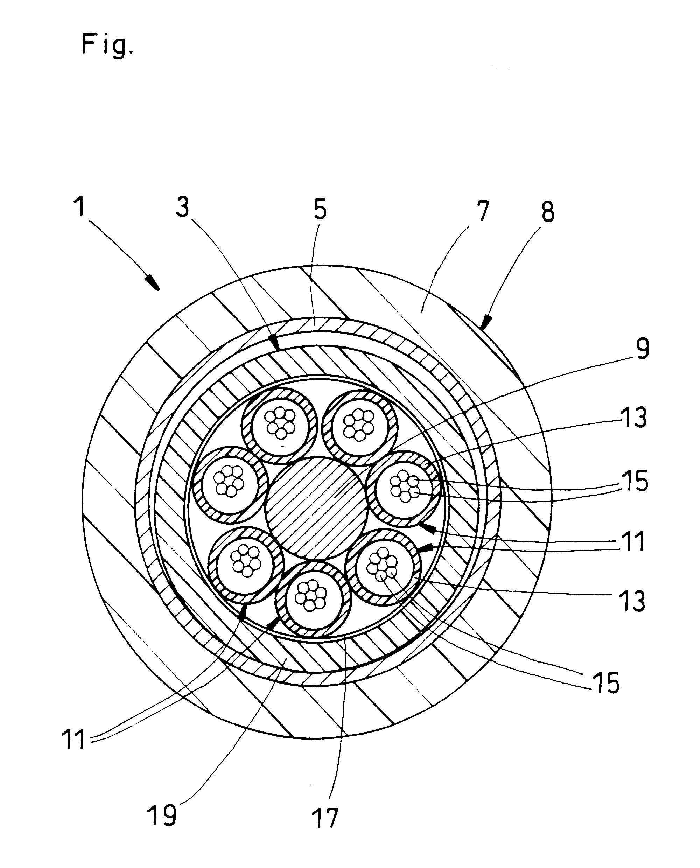

Ein Ausführungsbeispiel der Erfindung ist in der Zeichnung vereinfacht dargestellt und in der nachfolgenden Beschreibung näher erläutert.

Das in der Figur beispielhaft dargestellte optische Kabelsystem 1 weist ein optisches Kabel 3 auf, das von einem Außenleiter 5 und einem darüber liegenden Außenmantel 7 eines ehemaligen Koaxialkabels 8 umgeben ist. Das optische Kabel 3 hat ein Zentralelement 9, das z. B. durch einen Kupferdraht gebildet ist. Anstelle des Kupferdrahtes kann aber auch ein Aluminiumdraht oder ein mehrdrähtiger elektrischer Leiter aus Kupfer- oder Aluminiumdrähten verwendet werden. Das Zentralelement 9 bildet einen zentralen elektrischen Energie- oder Steuerleiter, der die Übertragung elektrischer Energie oder elektrischer Steuersignale ermöglicht und ohne eine eigene das Zentralelement umschließende elektrische Isolierung auskommt. Gemeinsam mit dem verbliebenen Außenleiter 5 des ursprünglich verlegten Koaxialkabels 8 kann beispielsweise die Energieversorgung entfernter optischer Verstärker oder anderer elektrischer Geräte sichergestellt werden.

Unmittelbar über dem Zentralelement 9 ist beispielsweise eine Lage von optischen Adern 11 verseilt, die gegebenenfalls mit dem Zentralelement 9 z. B. mittels eines Heißschmelzklebers verklebt sein können. Jede der optischen Adern 11 ist bei dem dargestellten Ausführungsbeispiel durch eine eine rohrförmige Hülle 13 und mehrere in dieser Hülle verlaufende optische Fasern 15 aufweisende Hohl- oder Bündelader gebildet. Um die eine Lage von optischen Adern 11 ist z. B. ein dünnwandiges Kunststoffband 17 gewickelt, das die optischen Adern 11 bis zur Fertigstellung des optischen Kabels 3 in ihrer Position hält. Zudem dient das Kunststoffband 17 als Trennschicht und schützt die optischen Adern 11 bei der Extrusion eines darüber vorgesehenen Mantels 19 vor zu hohen thermischen und mechanischen Beanspruchungen. Der Mantel 19 ist beispielsweise aus einem einen niedrigen Reibungsbeiwert aufweisenden Polyamid ausgebildet und hat eine Wanddicke von vorzugsweise 0,4 bis 0,8 mm. Der äußere Durchmesser des optischen Kabels 3 ist dabei so zu wählen, daß er in ausreichendem Maße kleiner als der innere Durchmesser des Außenleiters 5 des ursprünglich verlegten Koaxialkabels 8 bzw. eines beliebigen anderen Rohres ist, in das das optische Kabel 3 eingezogen werden soll. Auf diese Weise wird ein einfaches Einziehen des optischen Kabels 3 mit geringen Einziehkräften ermöglicht, ohne daß die Gefahr einer Beschädigung der optischen Fasern 15 durch unzulässig hohe Zugbeanspruchungen besteht.

Zur Herstellung des in der Figur beispielhaft dargestellten optischen Kabelsystems 1 werden zunächst in bekannter Weise z. B. durch ein in den in der Beschreibungseinleitung angegebenen Druckschriften beschriebenes Verfahren aus dem Koaxialkabel 8 die z. B. als Distanzscheiben zwischen dem zentralen Innenleiter und dem Außenleiter ausgebildeten Abstandshalter bzw. das zwischen zentralem Innenleiter und Außenleiter ausgebildete innere Dielektrikum sowie der zentrale Innenleiter selbst entfernt. Der Außenleiter 5 und der Außenmantel 7 des z. B. im Erdreich oder in einem Gebäude verlegten Koaxialkabels 8 bleiben unverändert. Anschließend wird das erfindungsgemäße optische Kabel 3, dessen äußerer Durchmesser kleiner als der innere Durchmesser des Außenleiters 5 des Koaxialkabels 8 ist, in den Außenleiter eingezogen und so ein optisches Kabelsystem ausgebildet, mit dessen durch das Zentralelement 9 und den Außenleiter 5 gebildeten elektrischen Leitern auch elektrische Energie oder elektrische Steuersignale übertragen werden können. Der Außenmantel 7 des ursprünglich verlegten Koaxialkabels 8 schützt dabei die in den optischen Adern 11 verlaufenden optischen Fasern 15 zuverlässig vor unzulässig hohen mechanischen Beanspruchungen.

Es ist selbstverständlich ebenfalls möglich, in den Außenleiter von Koaxialadern z. B. eines Fernkabels, aus denen zunächst der zentrale Innenleiter sowie die Abstandshalter bzw. das Dielektrikum entfernt wurden, ein erfindungsgemäßes optisches Kabel mit einem zentralen elektrischen Energie- oder Steuerleiter einzuziehen. Hierdurch ist eine kostengünstige Umrüstung auf die optische Nachrichtenübertragungstechnik möglich, ohne daß ein neues Kabelnetz verlegt werden muß. Über den zentralen Energie- oder Steuerleiter und den verbliebenen Außenleiter wird auf einfache Weise z. B. die Stromversorgung optischer Verstärker ermöglicht.

## Patentansprüche

1. Optisches Kabel mit einem Zentralelement (9), zumindest einer über dem Zentralelement (9) angeordneten optischen Ader (11) und einem Mantel (19), **dadurch gekennzeichnet**, daß das Zentralelement (9) durch einen zentralen elektrischen Energie- oder Steuerleiter gebildet ist.

2. Optisches Kabel nach Anspruch 1, **dadurch gekennzeichnet**, daß die optische Ader (11) durch eine eine rohrförmige Hülle (13) und wenigstens eine in dieser Hülle (13) verlaufende optische Faser (15) aufweisende Hohl-oder Bündelader gebildet ist.

3. Optisches Kabel nach Anspruch 1 oder 2, **dadurch gekennzeichnet**, daß der Mantel (19) aus Polyamid ausgebildet ist.

4. Optisches Kabel nach einem der Ansprüche 1 bis 3, **dadurch gekennzeichnet**, daß der Mantel (19) eine Wanddicke von 0,3 bis 1,2 mm aufweist.

5. Optisches Kabelsystem mit einem ein Zentralelement (9), zumindest eine über dem Zentralelement (9) angeordnete optische Ader (11) und einen Mantel (19) aufweisenden optischen Kabel (3), das in einen Außenleiter (5) einer Koaxialader oder eines Koaxialkabels (8), wobei Innenleiter und Abstandshalter bzw. inneres Dielektrikum zuvor entfernt sind, oder in ein anderes enges Rohr eingezogen ist, **dadurch gekennzeichnet**, daß das Zentralelement (9) des optischen Kabels (3) durch einen zentralen elektrischen Energie- oder Steuerleiter gebildet ist.

6. Optisches Kabelsystem nach Anspruch 5, **dadurch gekennzeichnet**, daß der Außenleiter (5) der Koaxialader oder des Koaxialkabels (8) einen elektrischen Energie- oder Steuerleiter bildet.

7. Optisches Kabelsystem nach Anspruch 5 oder 6, **dadurch gekennzeichnet**, daß der Mantel (19) des optischen Kabels (3) aus Polyamid ausgebildet ist.

8. Optisches Kabelsystem nach einem der Ansprüche 5 bis 7, **dadurch gekennzeichnet**, daß der Mantel (19) des optischen Kabels (3) eine Wanddicke von 0,3 bis 1,2 mm aufweist.

9. Verfahren zur Herstellung eines optischen Kabelsystems (1), bei dem zunächst aus einer Koaxialader oder einem Koaxialkabel (8) der Innenleiter und die Abstandshalter bzw. das innere Dielektrikum entfernt werden und anschließend ein ein Zentralelement (9), zumindest eine über dem Zentralelement (9) angeordnete optische Ader (11) und einen Mantel (19) aufweisendes optisches Kabel in einen Außenleiter (5) der Koaxialader oder des Koaxialkabels (8) eingezogen wird, **dadurch gekennzeichnet**, daß das Zentralelement (9) des optischen Kabels (3) durch einen zentralen elektrischen Energie- oder Steuerleiter gebildet ist.
